# EUROPEAN PATENT APPLICATION

(11) **EP 0 552 068 A1**
(43) Date of publication of application: **21.07.1993**
(21) Application number: 93300309.7
(22) Date of filing: 18.01.1993
(51) Int. Cl.: G05B 7/02, G05D 9/12

(54) **Control system and method**

(30) Priority: 16.01.1992 US 822189
(71) Applicant: HALLIBURTON COMPANY, Duncan Oklahoma 73536 (US)
(72) Inventor: Stephenson, Stanley V., Duncan, Oklahoma 73533 (US); Phillippi, Max lynn, Duncan, Oklahoma 73533 (US); Farabee, Leldon Mark, Duncan, Oklahoma 73533 (US); Dant, Ronald E. Mark, Duncan, Oklahoma 73533 (US)
(74) Representative: Wain, Christopher Paul

(57) **Abstract**

A control system and method permit simultaneous automatic and manual control of a device (e.g. a valve or valve actuator) for changing a parameter of a system, such as the fluid level in a tub of fracturing fluid used to fracture an oil or gas well. Rather than providing a control signal representing an integration of the parameter, the present invention provides a control signal (28) representing only an error or change so that integration occurs mechanically in the device for changing the parameter. This allows the mechanical integration to be manually overridden without disrupting the automatic control which is concerned only with the resultant error or change and not the total integration.

## Description

This invention relates generally to control systems and methods and more particularly, but not by way of limitation, to an automatic single feedback loop control system and method which can be manually overridden even while the automatic control is active.

In the oil and gas industry, wells are often treated with one or more types of fluids in creating the wells or in enhancing their productivity. One such fluid is a fracturing fluid made of liquid and dry additives in a base fluid. Part of a system for making a fracturing fluid includes a tub into which fluid is pumped and mixed with one or more of the additives and from which the fracturing fluid is pumped into the well. An example of such a system is the ARC System from Halliburton Services.

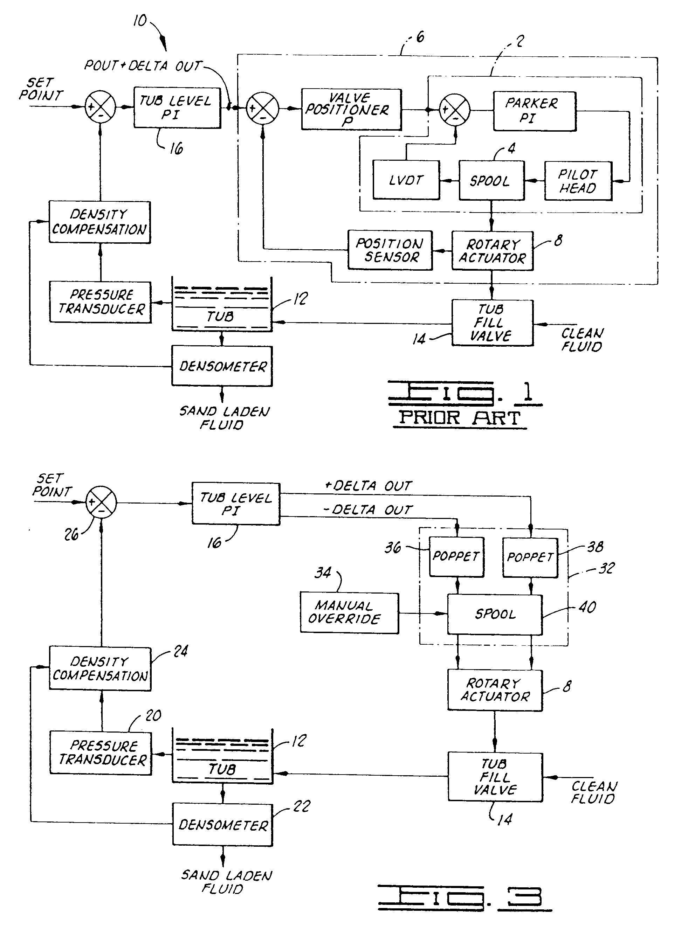

One parameter that is important to control in such a system is the level of the fluid in the tub. The level of fluid is a cumulative parameter in that it is not self-limiting. That is, fluid level continues to rise as long as there is net inflow to the tub and it continues to fall as long as there is net outflow from the tub. To monitor and control such a parameter, an electronic integration type control system is typically used. A particular electronic integration type control system used in the aforementioned ARC System is represented in FIG. 1.

The control system shown in FIG. 1 has an inner feedback loop 2 that maintains the position of a spool 4 of a proportional valve. A middle feedback loop 6, in response to the included inner feedback loop 2, controls the position of a rotary actuator 8. The inner loop 2 and the middle loop 6 are part of an overall or outer feedback loop 10 which senses the level of fluid in a tub 12 and controls a tub fill valve 14 in response to the sensed level, an input set point defining a desired tub level and the operation of the inner and middle feedback loops 2, 6. The primary control signal is provided by a tub level proportional-integral computer 16 which electronically performs an integration and generates the control signal representative of the integration. That is, the integration necessary to indicate and track the fluid level in the tub is done electrically in the programmed computer 16.

A shortcoming of the control system shown in FIG. 1 is that it cannot be manually overridden while the automatic control implemented by the three feedback loops 2, 6, 10 is active. Manual override would occur by physically shifting the position of the rotary actuator (or its driving spool valve); however, such external change would immediately be counteracted by the inner and middle feedback loops 2, 4 trying to return the rotary actuator 8 to the absolute position indicated by the control signal from the computer 16.

In the specific example of controlling the level of fluid in a tub used in a fracturing job at an oil or gas well, the ability to manually override the automatic control is desirable because sometimes the fluid flow into the tub needs to be increased or decreased more quickly than the automatic control normally provides. Although the aforementioned automatic control for the system shown in FIG. 1 can be overridden by first deactivating it and then manually controlling the spool 4 or the rotary actuator 8, it would be desirable to have a control system and method which provide automatic control that can be manually overridden without having to deactivate the automatic control. Manual override could be more quickly effected and yet automatic control maintained from the point of override. It would also be desirable to have such a control system and method include a simpler automatic control loop which does not have nested feedback loops.

The present invention overcomes or mitigates the above-noted and other shortcomings of the prior art by providing a novel and improved control system and method. The present invention uses mechanical integration to control an integration or cumulative type process instead of the electrical integration used in the system of FIG. 1.

With regard, for example, to a fluid system containing a tub 12 and tub fill valve 14 as depicted in FIG. 1, the present invention monitors fluid level in the tub 12 and controls the fill valve 14 with a single feedback control loop. The present invention permits manual adjustment of the fill valve 14 without disrupting the automatic control provided through the single feedback loop. This occurs by using only an incremental value control signal and performing integration mechanically within the mechanical device operating the fill valve 14. This provides "bumpless transfer" between automatic and manual control without having to deactivate or disconnect the automatic control. In the overall control system shown in FIG. 1, bumpless transfer can occur only by first deactivating or disconnecting the automatic control.

More generally, the present invention provides a compatible automatic and manual control method, comprising: (a) changing a detectable parameter of a system; and (b) controlling step (a) automatically in consonance with separate manual control of step (a) occurring simultaneously with said automatic control.

The present invention provides an automatic mechanically integrating control method allowing manual override, comprising: (a) sensing a cumulative parameter of a system; (b) computing an error in response to the sensed cumulative parameter and a desired value for the cumulative parameter; (c) automatically controlling a mechanical device for changing the cumulative parameter, wherein the mechanical device is automatically controlled in response to the computed error so that the device is incrementally changed from a previous setting in response to the computed error; and (d) manually changing the previous position of the mechanical device during any of steps (a), (b) and (c).

The present invention provides a mechanically integrating control method, comprising: (a) sensing a cumulative parameter of a system; (b) computing an error in response to the sensed cumulative parameter and a desired value for the cumulative parameter, including computing an error value, DELTA OUT, derived from an integration control equation; and (c) controlling a mechanical device for changing the cumulative parameter, including generating a control signal in response to DELTA OUT wherein the mechanical device is automatically controlled in response to the control signal so that the device is incrementally changed from a previous setting in response to the control signal.

The present invention provides a single feedback loop control system, comprising: means for sensing a parameter of the system; means for generating a control signal in response to a difference between the sensed parameter and a predetermined value for the parameter; means for changing the parameter in response to the control signal; and means for manually altering the means for changing, wherein the means for generating and the means for manually altering are simultaneously operatively connected to the means for changing.

Therefore, from the foregoing, it is a general object of the present invention to provide a novel and improved control system and method. Other and further objects, features and advantages of the present invention will be readily apparent to those skilled in the art when the following description of the preferred embodiment is read in conjunction with the accompanying drawings.

### Brief Description of the Drawings

FIG. 1 is a block diagram of a prior art control system.

FIG. 2 is a general block diagram of the preferred embodiment control system of the present invention.

FIG. 3 is a block diagram of a particular implementation of the preferred embodiment of the present invention.

### Detailed Description of Preferred Embodiment

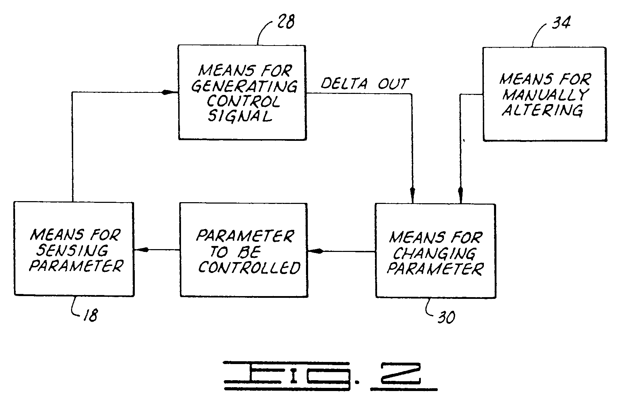

The preferred embodiment single feedback loop control system of the present invention is represented in FIG. 2. The control system includes means 18 for sensing a parameter of the system. As represented in the particular implementation of FIG. 3, the parameter can be the fluid level in the tub 12 so that the present invention can replace the prior art control system shown in FIG. 1. Although fluid level is specifically exemplified in FIG. 3, the present invention can be used with other parameters, one non-limiting example of which is temperature. Preferably, the parameters are of the integrating or cumulative type.

In the particular implementation of FIG. 3, the means 18 for sensing the parameter is the same as in the prior art system shown in FIG. 1. That is, the means 18 includes a known pressure transducer 20, a known densometer 22, and a known density compensation algorithm or device 24. These three elements operate to provide a signal representative of the level or amount of fluid in the tub 12. This is a negative feedback signal as indicated at 26 in FIG. 3.

Referring to FIG. 2, the signal indicating the sensed parameter is provided to a means 28 for generating a control signal in response to a difference between the sensed parameter and a predetermined value for the parameter. As indicated in FIG. 3, the predetermined value is input as a set point at which the parameter is to be maintained (i.e., the desired fluid level in FIG. 3). This is the same as in the prior art system represented in FIG. 1.

The means 28 of the FIG. 3 implementation of the preferred embodiment includes the same tub level proportional-integral computer 16 as used in the prior art system of FIG. 1. The computer 16 is programmed in a known manner to operate the same as in the FIG. 1 embodiment except that the control signal provided at its output is only "DELTA OUT" rather than "POUT + DELTA OUT". That is, in the prior art system of FIG. 1, the output signal provided from the programmed computer 16 is a digital implementation of the following proportional-integral control equation: OUT = [(100/PB)*NERROR] + PRESET. The prior art control system also uses the following equations:
C = EXECR*.0166/Tr
RESET = [(OUT - PRESET)*C] + PRESET
PRESET = RESET
where:
OUT = output from computer 16
PB = proportional band (gain adjustment factor)
NERROR = normalized error = (set point-sensed value)/(maximum for parameter)
EXECR = loop time of computer 16
Tr = integral time constant in minutes/repeat

As shown in the Appendix below, this digital implementation can be written as the equivalent implementation of:
OUT = POUT + DELTA OUT
DELTA OUT = (100/PB)*[DELTA NERROR + (C*NERROR)]
C = EXECR*.0166/Tr
where:
OUT = output from computer 16
POUT = previous output from computer 16
PB = proportional band (gain adjustment factor)
NERROR = normalized error = (set point - sensed value)/(maximum for parameters)
DELTA NERROR = previous normalized error minus present normalized error
EXECR = loop time of computer 16
Tr = integral time constant in minutes/repeat

In the prior art system, the total integration term (POUT + DELTA OUT) in the control equation must decay or increase to the proper value to hold the rotary actuator 8 (or, more generally, the "parameter changing device") at the correct position before stability is reached if the actuator 8 is manually moved. That is, the automatic control of the prior system tries to return a manually adjusted actuator 8 to its prior, pre-manually adjusted position in correspondence to OUT = POUT + DELTA OUT.

In the present invention, however, only DELTA OUT is sent to the parameter changing device as indicated in FIG. 2. As a result, the change in the parameter changing device is a mechanical accumulation within the device in response to the various DELTA OUT signals. This is distinguishable from the prior art system shown in FIG. 1 wherein it is the electrical device, namely the computer 16, which provides the accumulation of previous DELTA OUTS in the sum POUT + DELTA OUT. This distinction is important because it allows the present system to be manually moved to override the physical accumulation or setting in the parameter changing device without disrupting the on-going automatic control. Thus, in the present invention if the parameter changing device is manually moved, it will stay where it is moved until a subsequently computed DELTA OUT (i.e., one calculated in response to the level of fluid in the tub 12 resulting from the manual control of the tub fill valve 14) is sent to change it. In the prior art control system of FIG. 1, the integration output signal from the computer 16 (i.e., POUT + DELTA OUT) tends to resist manual adjustment. For both the prior art and present systems, if the parameter is at its correct value, then DELTA OUT equals zero.

In the particular implementation of FIG. 3, the means 30 for changing the parameter in response to the DELTA OUT control signal includes the rotary actuator 8 and the tub fill valve 14 just as in the prior art system of FIG. 1. It is, of course, the position of the tub fill valve 14 that is to be ultimately controlled to adjust the flow of fluid into the tub 12.

Although the rotary actuator 8 and the tub fill valve 14 are the same in the present invention, the remaining implementation of the means 30 is different from the system shown in FIG. 1. Whereas in the prior art system of FIG. 1 there are the inner feedback loop 2 and the middle feedback loop 6, in the FIG. 3 implementation there is only a hydraulic proportional valve 32 which is responsive both to the DELTA OUT signal (which can be either positive or negative for increasing or decreasing changes) and to a means 34 for manually altering the valve 32. A specific implementation of the valve 32 is an Apitech pulse width modulated valve having poppets 36, 38 responsive to the negative and positive DELTA OUT signals, respectively. The valve 32 also includes a spool 40 whose position is adjusted either by hydraulic pressure applied through either of the poppets 36, 38 or by physical displacement applied via the manual override means 34 (the manual override means 34 is any suitable mechanical or other type of device, such as a shifter arm physically connected to the spool 40). The poppets 36, 38 are electrically controlled to adjust the application of a hydraulic fluid to the spool 40 in a known manner. Adjustment of the spool 40 controls the application of a hydraulic fluid to the rotary actuator 8 as also known in the art. The hydraulic sources for the poppets 36, 38 and the spool 40 are not illustrated in FIG. 3, but their use in association with a valve such as the valve 32 is well known in the art.

By using the DELTA OUT signals and the valve 32 as shown in FIG. 3, the rotary actuator 8 mechanically performs integration in that the position of the rotary actuator 8 progresses over time in response to the various DELTA OUT signals controlling it. Thus, the position of the rotary actuator 8 at a given time will be the same as the position of the rotary actuator 8 in the prior art system of FIG. 1 but for any manual override applied to the rotary actuator 8 by the present invention. Such manual override can be applied in the present invention while the automatic control is active. That is, both automatic and manual control are simultaneously operative in the present invention. Manual control overrides, but automatic control immediately responds to a change in the sensed parameter effected by the manual control.

To summarize the foregoing, the system shown in FIGS. 2 and 3 can be used to implement a compatible automatic and manual control method. This method allows the parameter which is to be controlled and which is sensed or detected by the means 18 to be changed in accordance with a predetermined or desired set point. This change is controlled automatically in consonance with separate manual control of the change occurring simultaneously with the automatic control (i.e., while the automatic control is active). In the particular implementation of FIG. 3, control occurs by computing a plus or minus DELTA OUT signal equal to A*[DELTA NERROR + (C*NERROR)] where A is a gain adjustment factor, DELTA NERROR is a previous normalized error minus a present normalized error, C is a predetermined value, and NERROR is the present normalized error (for the preferred embodiment, each of these is defined the same as for the equations set forth hereinabove). This can be specifically implemented using the computer 16 to compute an integrated control value POUT + DELTA OUT where POUT is a previously computed integrated control value, but using only DELTA OUT to generate a control signal.

The error signal DELTA OUT enables the mechanical device, including in the FIG. 3 implementation the rotary actuator 8, to be controlled automatically so that it is incrementally changed from a previous setting in response to the computed error; however the previous position can be manually changed during any of the steps of the automatic control without the automatic control trying to counteract the manual controls except as occurs through subsequent DELTA OUT signals responsive to the resultant change in the sensed parameter.

Thus, the present invention is well adapted to carry out the objects and attain the ends and advantages mentioned above as well as those inherent therein. While a preferred embodiment of the invention has been described for the purpose of this disclosure, changes in the construction and arrangement of parts and the performance of steps can be made by those skilled in the art, which changes are encompassed within the spirit of this invention as defined by the appended claims.

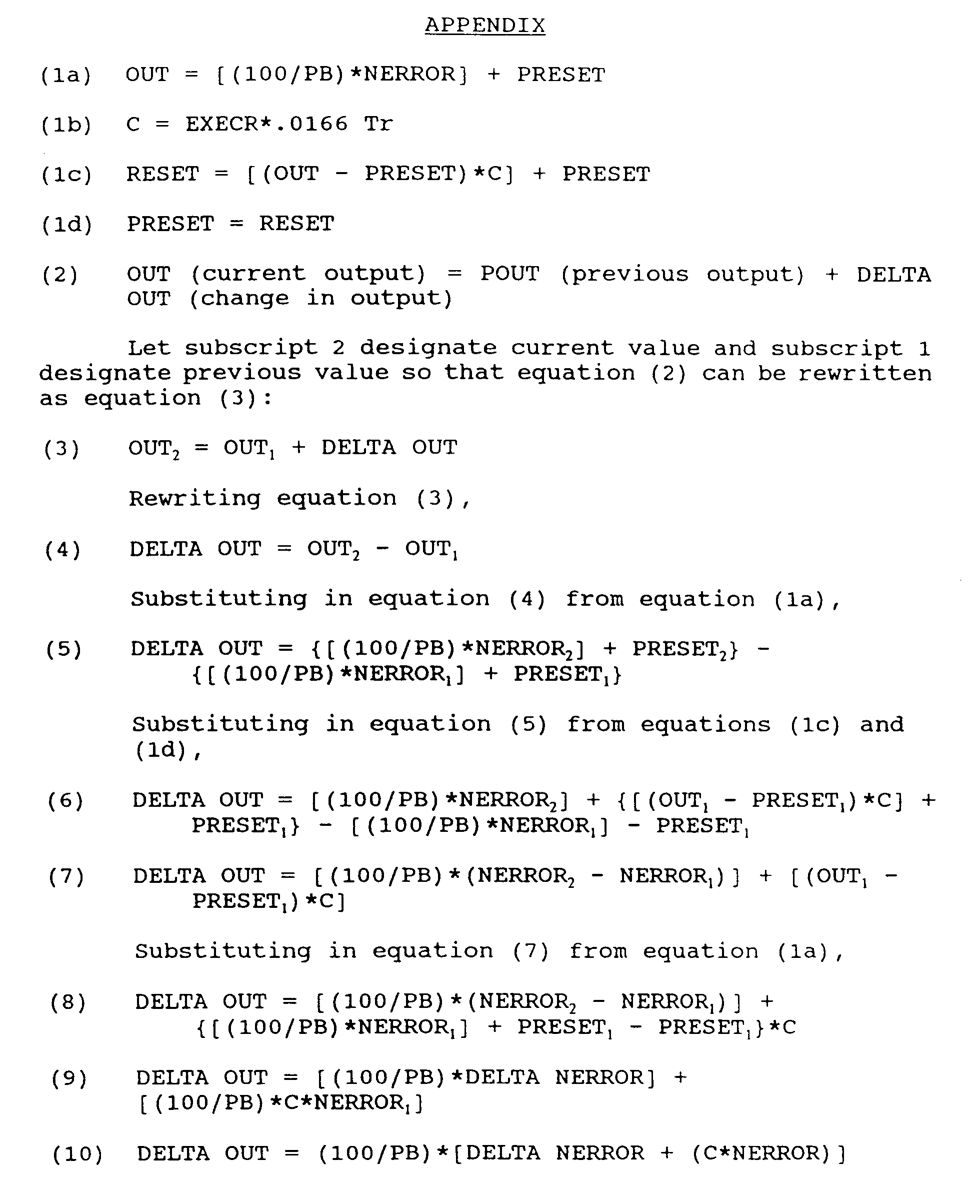

## Claims

1. An automatic mechanically integrating control method allowing manual override, comprising:
(a) sensing a cumulative parameter of a system;
(b) computing an error in response to the sensed cumulative parameter and a desired value for the cumulative parameter;
(c) automatically controlling a mechanical device for changing the cumulative parameter, wherein the mechanical device is automatically controlled in response to the computed error so that the device is incrementally changed from a previous position in response to the computed error; and
(d) manually changing the previous position of the mechanical device during any of said steps (a), (b) and (c).

2. A method according to claim 1, wherein said step (b) includes computing A*[DELTA NERROR + (C*NERROR)], where A is a gain adjustment factor, DELTA NERROR is a previous normalized error minus a present normalized error, C is a predetermined value, and NERROR is the present normalized error.

3. A method according to claim 1, wherein said step (b) includes automatically computing an integrated control value POUT + DELTA OUT, where POUT is a previously computed integrated control value and DELTA OUT is an error value; and said step (c) includes automatically generating a control signal in response only to DELTA OUT.

4. A method according to claim 3, wherein the cumulative parameter is the level of a fluid in a tub and wherein the mechanical device is a hydraulic valve actuator.

5. A single feedback loop control system, comprising means for sensing a parameter of the system; means for generating a control signal in response to a difference between the sensed parameter and a predetermined value for the parameter; means for changing the parameter in response to the control signal; and means for manually altering the means for changing, wherein said means for generating and said means for manually altering are simultaneously operatively connected to said means for changing.

6. A system according to claim 5, wherein said means for generating includes a computer programmed to compute A*[DELTA NERROR + (C*NERROR)], where A is a gain adjustment factor, DELTA NERROR is a previous normalized error minus a present normalized error, C is a predetermined value, and NERROR is the present normalized error, and to generate said control signal in response thereto.

7. A system according to claim 5, wherein said means for generating includes a computer programmed to compute an integrated control value POUT + DELTA OUT, where POUT is a previously computed integrated control value and DELTA OUT is an error value, and to generate said control signal in response only to DELTA OUT.

8. A system according to claim 5, wherein said means for changing includes a valve for controlling the flow of a fluid into a tub, wherein the operation of said valve is responsive to said control signal and said means for manually altering; and said means for sensing is responsive to the amount of fluid in the tub.

9. A system according to claim 8, wherein said means for generating includes means for computing A*[DELTA NERROR + (C*NERROR)], where A is a gain adjustment factor, DELTA NERROR is a previous normalized error minus a present normalized error, C is a predetermined value, and NERROR is the present normalized error, and for generating said control signal in response thereto.

10. A system according to claim 8, wherein said means for generating includes means for computing an integrated control value POUT + DELTA OUT, where POUT is a previously computed integrated control value and DELTA OUT is an error value, and for generating said control signal in response only to DELTA OUT.
